# FASCICULE DE BREVET EUROPEEN

(11) **EP 3 777 081 B1**
(45) Date de publication et mention de la délivrance du brevet: **11.09.2024**
(21) Numéro de dépôt: 19718782.6
(22) Date de dépôt: 21.03.2019
(51) Int. Cl.: H04L 65/1069, H04L 65/80, H04L 65/1104, H04M 3/42

(54) **PROCÉDÉ DE GESTION D'UNE PLURALITÉ DE FLUX MÉDIA, ET DISPOSITIF ASSOCIÉ**
VERFAHREN ZUR VERWALTUNG EINER VIELZAHL VON MEDIENSTRÖMEN UND ZUGEHÖRIGE VORRICHTUNG
METHOD FOR MANAGING A PLURALITY OF MEDIA STREAMS, AND ASSOCIATED DEVICE

(30) Priorité: 29.03.2018 FR 1852766
(43) Date de publication de la demande: 17.02.2021
(73) Titulaire: Orange, 92130 Issy-les-Moulineaux (FR)
(72) Inventeur: BOUVET, Bertrand, 92326 CHÂTILLON CEDEX (FR); PROUVOST, Sébastien, 92326 CHÂTILLON CEDEX (FR)
(74) Mandataire: Cabinet Beau de Loménie
(86) Numéro de dépôt international: PCT/FR2019/050643
(87) Numéro de publication internationale: WO 2019/186030

(56) Documents cités:
- WO-A1-2012/042150
- WO-A1-2012/042150
- US-A1- 2016 308 915
- US-A1- 2016 308 915

## Description

La présente invention se situe dans le domaine des réseaux de télécommunications, tels que les réseaux de type IMS (« IP Multimedia Subsystem » en terminologie anglo-saxonne), voix sur IP (« Voice over IP » en terminologie anglo-saxonne, ayant pour acronyme « VoIP »), ou Circuit.

La présente invention concerne plus précisément des procédés de gestion de flux média, destinés à être restitués par un dispositif appelant avant la finalisation de l'établissement d'une communication entre le dispositif appelant et un dispositif appelé (aussi appelés flux « early media »).

Un tel flux média peut être généré par le dispositif appelant, le dispositif appelé, ou encore par un équipement réseau intermédiaire.

De plus, un tel flux média est généralement un flux audio ou vidéo. Le flux média peut par exemple être un retour de sonnerie d'appel (« Ring Back Tone » en terminologie anglo-saxonne, ayant pour acronyme « RBT »), un flux musical, tel qu'un « Colored Ringback Tone », ou une annonce.

Après envoi d'une requête d'établissement d'une communication, le dispositif appelant peut recevoir un message indiquant au dispositif appelant de restituer un flux média. Le dispositif appelant peut recevoir le flux média et le restituer, ou retrouver le flux média dans sa mémoire et le restituer, sans que cela pose de difficulté.

Cependant, dans certaines situations, le dispositif appelant peut recevoir plusieurs messages, chaque message indiquant au dispositif appelant de restituer un flux média différent. En effet, plusieurs flux média peuvent être générés séquentiellement et/ou en parallèle avant la finalisation de l'établissement de la communication.

Cela est par exemple le cas lorsqu'un mécanisme de direction d'un même appel vers plusieurs dispositifs appelés est mis en place (« forking », en terminologie anglo-saxonne).

Ce mécanisme SIP (pour « Session Initiation Protocol ») permet, pour un même appel (et donc pour l'émission d'une même requête d'établissement d'une communication), d'atteindre plusieurs destinataires, soit en simultané (tous les destinataires sont sollicités dès l'émission de l'appel) soit en séquentiel (un premier destinataire est sollicité, puis, en fonction de sa réponse, le second destinataire est sollicité, etc.).

D'autres services utilisant un tel mécanisme sont les services de renvoi d'appel en mode « sonneries simultanées » ou « sonneries séquentielles », les services de mise en relation via un serveur vocal interactif (SVI) ou un centre d'appel, ainsi que les services de type « Multi terminal SIP ».

La diffusion de flux média s'intensifie en outre du fait d'une réglementation incitant de plus en plus souvent à mieux informer les consommateurs. Les flux média diffusés sont alors des annonces vocales diffusées avant la facturation réelle de l'appelant.

Lorsque le dispositif appelant reçoit plusieurs messages (typiquement lorsque le « forking » n'est pas masqué au dispositif appelant), chaque message indiquant au dispositif appelant de restituer un flux média différent, le dispositif appelant ne sait pas traiter correctement cette pluralité de messages.

Aucune solution n'a été apportée par la normalisation IETF (pour « Internet Engineering Task Force »), qui a pourtant soulevé le problème du traitement d'une telle pluralité de flux média (voir par exemple l'extrait « Early Media and Ringing Tone Génération in the Session Initiation Protocol » du RFC3960).

Ainsi, généralement, le dispositif appelant choisit un flux média au hasard et restitue uniquement ce flux.

US 2016/308915 A1 divulgue un procédé de gestion d'une pluralité de flux média destinés à être restitués par un dispositif appelant, mis en oeuvre avant la finalisation de l'établissement d'une communication. WO 2012/042150 divulgue la réception, par un terminal, d'un message REP comprenant un indicateur IND de priorité.

### Objet et résumé de l'invention

La présente invention concerne un procédé de gestion d'une pluralité de flux média conformément à la revendication 1.

La sélection d'un flux média en fonction des deuxièmes degrés de priorité permet de restituer le flux média le plus pertinent, par exemple pour chaque phase de l'établissement de la communication. L'expérience de l'utilisateur est ainsi améliorée.

Par ailleurs, la sélection du flux à la fin de la durée prédéterminée permet de gérer l'arrivée asynchrone de plusieurs messages reçus par le dispositif appelant en réponse à la requête. En effet, le dispositif appelant ne dispose d'aucune information sur le nombre de messages qu'il peut recevoir en réponse à cette requête, et les délais de transit des messages peuvent différer.

Dans un mode de réalisation particulier, pour chaque flux média de la pluralité de flux média :
- le deuxième degré de priorité obtenu est le premier degré de priorité en cas de présence du premier degré de priorité dans le message reçu,
- le deuxième degré de priorité obtenu est un degré de priorité par défaut en cas d'absence de premier degré de priorité dans le message reçu.

La solution de l'invention prend ainsi en compte les diversités de fonctionnement et de configuration des équipements réseau.

Dans un mode de réalisation particulier, l'étape de sélection comprend une comparaison des deuxièmes degrés de priorité associés auxdits flux média de ladite pluralité de flux média, un flux média étant sélectionné en fonction du résultat de la comparaison.

Dans un mode de réalisation particulier, l'étape de sélection comprend une obtention d'un deuxième degré de priorité associé à un premier flux média de ladite pluralité de flux média, suite à la réception d'un premier message reçu en réponse à la requête d'établissement de la communication,
ladite obtention dudit deuxième degré de priorité associé audit premier flux média étant suivie d'une étape de restitution dudit premier flux média,
l'étape de sélection comprenant en outre, pendant l'étape de restitution dudit premier flux média, une obtention d'un deuxième degré de priorité associé à un deuxième flux média de ladite pluralité de flux média, suite à la réception d'un deuxième message reçu en réponse à la requête d'établissement de la communication,
le procédé comprenant, si le deuxième degré de priorité du deuxième flux média est supérieur au deuxième degré de priorité du premier flux média, une étape d'interruption de la restitution du premier flux média, et une étape de restitution du deuxième flux média, à la place du premier flux média.

Dans un mode de réalisation particulier, l'étape de réception comprend une réception d'un message de signalisation associé à un flux média de ladite pluralité de flux média, le premier degré de priorité dudit flux média étant alors recherché dans ledit message de signalisation.

Dans un mode de réalisation particulier, l'étape de recherche comprend une identification du flux média associé audit message de signalisation, en comparant la valeur d'une donnée dudit message de signalisation avec la valeur d'une donnée dudit flux média associé audit message de signalisation.

Dans un mode de réalisation particulier, l'étape de réception comprend une réception d'un paquet de contrôle associé à un flux média de ladite pluralité de flux média, le premier degré de priorité étant alors recherché dans ledit paquet de contrôle.

La solution de l'invention prend ainsi en compte les diversités de fonctionnement et de configuration des équipements réseau.

Dans un mode de réalisation particulier, le troisième message est le premier message.

Dans un mode de réalisation particulier, la durée prédéterminée dépend de la valeur du deuxième degré de priorité obtenu en fonction du résultat de la recherche dans ledit troisième message.

Ainsi, le délai entre l'envoi de la requête et la restitution de la première information de flux média est limité, de sorte à ne pas laisser l'utilisateur dans le « vide/blanc », ce qui permet d'améliorer l'expérience de l'utilisateur du dispositif appelant. En effet, plus l'équipement générant le flux média est proche du dispositif appelant, moins les délais réseaux sont importants pour recevoir le message, et moins la probabilité de recevoir d'autres messages liés à d'autres flux média est importante.

Dans un mode de réalisation particulier, la restitution étant accélérée de sorte que la durée de l'étape de restitution est diminuée de la durée prédéterminée.

Cette restitution accélérée permet de retrouver un aspect temps réel lorsque l'utilisateur du dispositif appelé accepte l'appel. En effet, la restitution accélérée permet de ne pas tronquer l'information du flux média (par exemple, dans le cas d'une annonce vocale, il y a ainsi moins de risque de répéter cette annonce vocale), tout en optimisant les ressources mémoire du dispositif appelant.

Dans un mode de réalisation particulier, l'étape de recherche comprend une réception d'au moins un flux de ladite pluralité de flux média comprenant :
- une détection d'un dispositif dit dispositif de traduction, mettant en oeuvre une traduction d'adresse réseau du dispositif appelant, et
- pour chaque flux média, un envoi d'une donnée transitant par ledit dispositif de traduction, de sorte à créer une entrée au niveau du dispositif de traduction permettant de réceptionner ledit flux média.

Dans un mode de réalisation particulier, le procédé comprend une étape de détection d'un type d'appel, les étapes de recherche d'un premier degré de priorité et de sélection d'un flux média étant mises en oeuvre si le type de l'appel est standard.

Dans un mode de réalisation particulier, pour chaque flux média de la pluralité, le premier degré de priorité est déterminé en fonction de la distance réseau entre le dispositif appelant et un dispositif réseau associé audit flux.

L'invention concerne en outre un dispositif appelant selon la revendication 10.

L'invention concerne de plus un système de gestion d'au moins un flux média comprenant le dispositif appelant précédemment évoqué, ainsi qu'un dispositif appelé ou un équipement réseau intermédiaire configuré pour mettre en oeuvre les étapes suivantes :
- pour chacun de l'au moins un flux, détermination du premier degré de priorité associé,
- pour chaque premier degré de priorité déterminé, envoi dudit premier degré de priorité dans le message reçu par le dispositif appelant en réponse à l'envoi de la requête d'établissement de la communication.

Dans un mode particulier de réalisation, les différentes étapes du procédé selon l'invention sont déterminées par des instructions de programmes d'ordinateurs.

En conséquence, l'invention vise aussi un programme d'ordinateur, sur un support d'informations, ce programme comportant des instructions adaptées à la mise en oeuvre des étapes d'un procédé selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, sous forme d'organigramme, les principales étapes d'un procédé de gestion d'une pluralité de flux média selon un exemple de mode de réalisation non couvert par le texte des revendications, mais utile à la compréhension de l'invention ;
- la figure 2 représente, de manière schématique, un système de gestion d'une pluralité de flux média selon un exemple de mode de réalisation de l'invention ;
- les figures 3 à 8 représentent, sous forme d'organigrammes, des étapes de procédés de gestion d'une pluralité de flux média selon des exemples de mode de réalisation non couverts par le texte des revendications, mais utile à la compréhension de l'invention ;
- la figure 9 représente, sous forme d'organigramme, les principales étapes d'un procédé de gestion d'au moins un flux média selon un exemple de mode de réalisation non couvert par le texte des revendications, mais utile à la compréhension de l'invention ;
- la figure 10 représente, de manière schématique, des exemples de distances réseau entre des équipements réseau et un terminal appelant.

### Description détaillée de plusieurs modes de réalisation

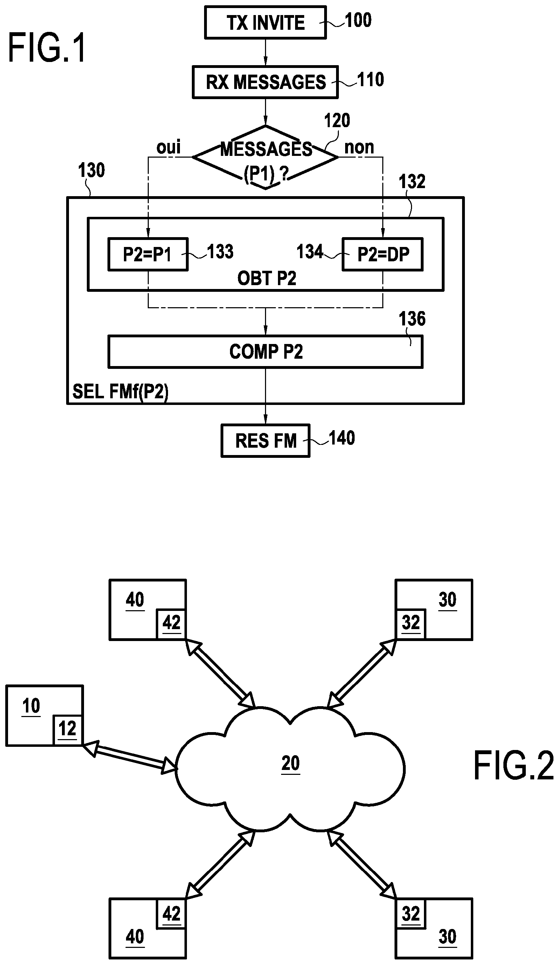

La **figure 1** représente, sous forme d'organigramme, les principales étapes d'un procédé de gestion d'une pluralité de flux média destinés à être restitués par un dispositif appelant avant la finalisation de l'établissement d'une communication, selon un exemple de mode de réalisation non couvert par le texte des revendications, mais utile à la compréhension de l'invention.

Comme décrit ci-dessus, un flux média destiné à être restitué par un dispositif appelant avant la finalisation de l'établissement d'une communication est généralement un flux audio ou vidéo. Un tel flux média peut par exemple être :
- un retour de sonnerie d'appel (« Ring Back Tone » en terminologie anglo-saxonne, ayant pour acronyme « RBT »), typiquement envoyé par un équipement du réseau appelé de type CAA (Commutateur à Autonomie d'Acheminement) sur un réseau fixe RTC (Réseau Téléphonique Commuté) et MSC (Mobile Switch Center) sur un réseau mobile,
- un flux musical, tel qu'un « Colored Ringback Tone »,
- une annonce de temps d'attente (typiquement lorsque l'appelé est un centre d'appel),
- une annonce règlementaire expliquant la facturation d'un service (typiquement lorsque l'appelé est un centre d'appel ou un serveur vocal interactif),
- une annonce de service de numéros d'urgence, telle qu'une annonce de dissuasion,
- une annonce liée à un service de télécommunications (par exemple le service d'appel en attente, informant l'appelant que l'appelé est en cours de communication et informé de l'appel),
- une annonce de ligne interrompue lorsque l'appelé n'a pas payé ses factures,
- le service de renvoi d'appel multi-destinations séquentiel/simultané,
- l'accès à des services de réseau intelligent de type carte prépayée,
- une annonce d'un service de rappel du dernier appelant (le service 3131 chez Orange ^{®} en France), etc.

Ce procédé peut être mis en oeuvre par un dispositif appelant 10 conforme à l'invention, représenté, dans son contexte, à la **figure 2****.**

Le dispositif appelant 10 a l'architecture matérielle d'un ordinateur. Il comporte notamment un processeur, une mémoire morte, une mémoire vive et une mémoire flash non volatile non représentés, ainsi que des moyens de communication 12 par lesquels il est relié à un réseau de communication 20, auquel peuvent être aussi reliés un ou plusieurs dispositifs appelés 30 et éventuellement un ou plusieurs équipements intermédiaires 40.

La mémoire morte du dispositif appelant 10 constitue un support d'enregistrement conforme à l'invention, lisible par le processeur et sur lequel est enregistré un programme d'ordinateur conforme à l'invention, comportant des instructions pour l'exécution des étapes du procédé de la figure 1. En variante, le programme d'ordinateur est stocké dans la mémoire vive du dispositif appelant 10.

Le dispositif appelant 10 peut être un terminal tel qu'un téléphone fixe ou mobile, un ordinateur, un smartphone, une tablette numérique, une TV connectée, un véhicule, un objet connecté, etc.

Chaque dispositif appelé 30 peut être un terminal tel qu'un téléphone fixe ou mobile, un ordinateur, un smartphone, une tablette numérique, un véhicule, un objet connecté, etc., ou un autocommutateur téléphonique privé tel qu'un PABX (pour « Private Automatic Branch eXchange ») ou IPBX (pour « Internet Protocol Private Branch eXchange »).

En outre, chaque équipement supplémentaire 40 peut être un serveur MRF (pour « Media Ressource Function ») piloté par un serveur d'application, un commutateur d'un réseau fixe, un commutateur de réseau mobile, une plate-forme de réseau Intelligent, un serveur d'interconnexion de réseaux tel qu'un I-SBC (pour Interconnect Session Border Controler), une Media Gateway, une box d'accès au réseau, etc.

Dans cet exemple, le dispositif appelant 10 souhaite établir une communication avec un dispositif appelé 30. Le dispositif appelant 10 envoie alors, dans une étape 100, une requête INVITE d'établissement de la communication (ou d'établissement d'une session SIP), à destination du dispositif appelé 30.

Le dispositif appelant 10 peut ensuite recevoir, en réponse à la requête INVITE plusieurs messages, chaque message étant associé à un flux différent de la pluralité de flux (étape 110).

Par « en réponse à la requête INVITE », on entend que le message est une réponse directe ou indirecte à la requête INVITE, que le message est envoyé suite à l'envoi de la requête INVITE.

Le dispositif appelant 10 recherche alors, pour chaque flux média de la pluralité de flux, un premier degré de priorité P1 associé au flux média, dans le message reçu associé à ce flux (étape 120).

Le premier degré de priorité P1 est par exemple un chiffre réel pouvant être compris entre 0.0 et 1.0, de sorte que la valeur 1.0 corresponde à la priorité la plus élevée. Les valeurs des premiers degrés de priorité P1 peuvent être normalisées en fonction de l'importance des flux média associés à ces degrés de priorité.

Ensuite, dans une étape 130, le dispositif appelant 10 sélectionne, parmi la pluralité de flux média, un flux média FM en vue de le restituer. La sélection du flux média FM est effectuée en fonction de deuxièmes degrés de priorité P2 associés aux flux média, ces deuxièmes degrés de priorité P2 étant obtenus (sous-étape 132) en fonction du résultat de la recherche mise en oeuvre à l'étape 120. Chaque deuxième degré de priorité P2 indique en effet la pertinence du flux média vis-à-vis de l'utilisateur du dispositif appelant 10.

Plus précisément, pour chaque flux média de la pluralité de flux :
- le deuxième degré de priorité P2 obtenu peut être le premier degré de priorité P1 en cas de présence du premier degré de priorité P1 dans le message reçu (sous-étape 133),
- le deuxième degré de priorité P2 obtenu peut être un degré de priorité par défaut DP en cas d'absence de premier degré de priorité P1 dans le message reçu (sous-étape 134), la valeur du degré de priorité par défaut DP étant typiquement de 0.0 (correspondant à la priorité la plus basse).

L'étape de sélection 130 peut comprendre ensuite une comparaison des deuxièmes degrés de priorité P2 associés auxdits flux média de la pluralité de flux média (sous-étape 136), un flux média étant sélectionné en fonction du résultat de la comparaison. Par exemple, le flux média sélectionné est le flux média associé au deuxième degré de priorité ayant la valeur la plus élevée.

Dans une étape 140, le dispositif appelant 10 peut ensuite restituer le flux média FM sélectionné à l'étape 130, de sorte que l'utilisateur du dispositif appelant 10 puisse entendre la restitution du flux média le plus pertinent, avant que l'utilisateur du dispositif appelé 30 accepte d'établir la communication.

Comme décrit plus en détail ci-après, le flux média FM restitué peut être préenregistré dans la mémoire morte ou vive du dispositif appelant 10, reçu par le dispositif appelant 10 puis mémorisé au moins en partie dans la mémoire vive du dispositif appelant 10 avant la restitution, ou reçu par le dispositif appelant 10 en temps réel.

En outre, comme décrit ci-après, chacune des étapes de réception 110, de recherche 120, de sélection 130 et de restitution 140 peuvent être réitérées une ou plusieurs fois.

La finalisation de l'établissement d'une communication correspond au moment ou un utilisateur du dispositif appelé 30 accepte la communication ou au moment ou un autre utilisateur accepte la communication en cas de renvoi d'appel, ou encore lorsqu'un serveur accepte la communication par exemple la messagerie de l'utilisateur du dispositif appelé 30, ou bien encore un serveur applicatif.

Dans l'étape 110 de réception, la réception de deux messages différents peut être séquentielle (les deux messages sont reçus à différents moments de la phase d'établissement de la communication, avant la finalisation de l'établissement). La durée écoulée entre la réception d'un des deux messages et la réception séquentielle de l'autre message est typiquement de l'ordre de la dizaine de secondes.

Lorsque la réception est séquentielle, l'étape de sélection 130 peut alors comprendre une obtention 132 d'un deuxième degré de priorité P2 associé à un premier flux média, suite à la réception d'un premier message reçu en réponse à la requête INVITE d'établissement de la communication, cette obtention 132 étant suivie d'une restitution 140 du premier flux média.

En effet, à ce stade, un seul message associé à un flux média est reçu par le dispositif appelant 10. La sous-étape 136 de comparaison ne peut donc pas être mise en oeuvre.

L'étape de sélection 130 peut comprendre ensuite, pendant la restitution 140 du premier flux média, une obtention 132 d'un deuxième degré de priorité P2 associé à un deuxième flux média, suite à la réception 110 d'un deuxième message reçu en réponse à la requête INVITE d'établissement de la communication.

Le dispositif appelant 10 peut alors mettre en oeuvre la sous-étape 136 de comparaison. Si le deuxième degré de priorité P2 du deuxième flux média est supérieur au deuxième degré de priorité P2 du premier flux média, la restitution du premier flux média est interrompue, et le deuxième flux média est restitué, à la place du premier flux média. Si le deuxième degré de priorité P2 du premier flux média est supérieur au deuxième degré de priorité P2 du deuxième flux, la restitution du premier flux se poursuit, et le deuxième flux média n'est pas restitué.

La restitution du premier flux peut être interrompue dès la sélection du deuxième flux média, ou à la fin du premier flux.

La fin du premier flux peut être indiquée au dispositif appelant 10 au moyen d'un message de signalisation envoyé au dispositif appelant 10, typiquement un message de signalisation comprenant un entête P-Early-Media (PEM) ayant un paramètre attribut a=inactive.

Le dispositif appelant peut aussi détecter la fin du premier flux lorsqu'il arrête de recevoir le premier flux, typiquement pendant une durée prédéterminée, ou à la réception d'un paquet RTCP BYE émis par le dispositif appelé 30 associé au premier flux.

La sous-étape 136 de comparaison peut être réitérée si, pendant la restitution du premier flux média ou du deuxième flux média, un troisième message associé à un troisième flux média est reçu par le dispositif appelant 10.

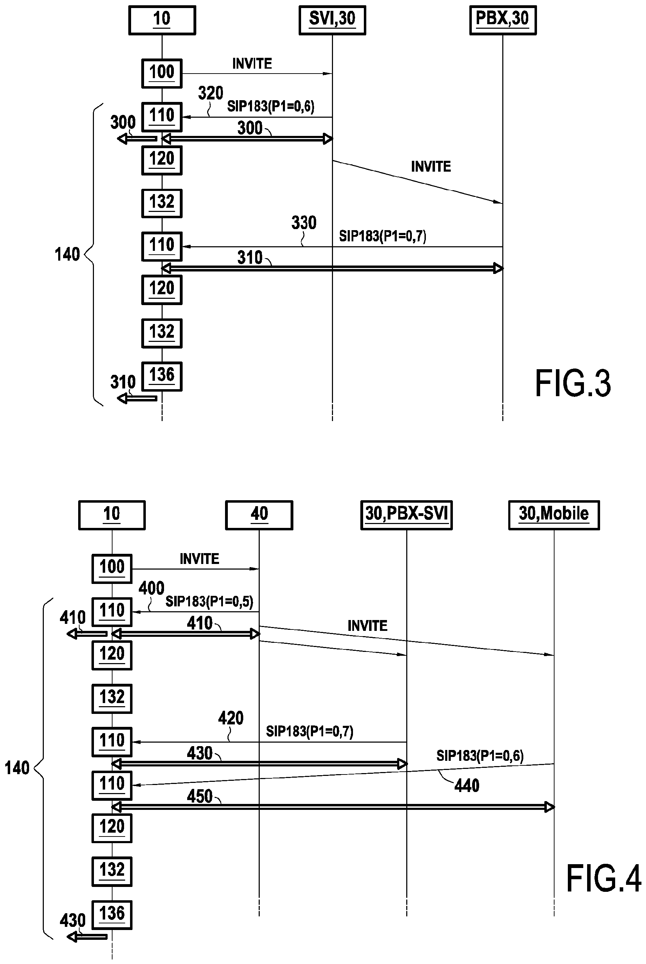

La **figure 3** illustre un exemple comprenant une réception séquentielle de deux messages différents, typiquement mise en oeuvre lorsque l'utilisateur du dispositif appelant 10 tente de contacter un service associé à un numéro payant. Dans une telle situation, l'utilisateur du dispositif appelant 10 devrait tout d'abord écouter la restitution d'un premier flux média 300 associé à un serveur vocal interactif SVI (premier dispositif appelé 30), qui comprend une annonce indiquant que l'appel est payant, puis écouter la restitution d'un deuxième flux média 310 associé à un autocommutateur téléphonique privé PBX (deuxième dispositif appelé 30), comprenant par exemple une description du service que l'utilisateur tente de contacter et/ou un message d'attente.

La requête INVITE envoyée par le dispositif appelant 10 est tout d'abord reçue par le serveur vocal interactif SVI, qui envoie un premier message 320 à destination du dispositif appelant 10, ainsi que le premier flux média 300. Le dispositif appelant 10 restitue alors le premier flux média 300 car il n'a à ce stade que le premier flux média 300 à restituer.

Le dispositif appelant 10 peut en outre rechercher un premier degré de priorité P1 associé au premier flux média 300 dans le premier message 320. On suppose dans cet exemple que le dispositif appelant 10 trouve dans le premier message 320 un premier degré de priorité P1 associé au premier flux média 300, la valeur de ce premier degré de priorité P1 étant de 0.6. La valeur du deuxième degré de priorité P2 est alors égale à 0.6.

En parallèle, le serveur vocal interactif SVI transmet la requête INVITE à l'autocommutateur téléphonique privé PBX. L'autocommutateur téléphonique privé PBX envoie alors à destination du dispositif appelant 10 un deuxième message 330, ainsi que le deuxième flux média 310.

Le dispositif appelant 10 peut alors rechercher un premier degré de priorité P1 associé au deuxième flux média 310 dans le deuxième message 330. On suppose dans cet exemple que le dispositif appelant 10 trouve dans le deuxième message 330 un premier degré de priorité P1 associé au deuxième flux média 310, la valeur de ce premier degré de priorité P1 étant de 0.7. La valeur du deuxième degré de priorité P2 est alors égale à 0.7.

Le dispositif appelant 10 compare alors la valeur du deuxième degré de priorité P2 du premier flux média 300 et la valeur du deuxième degré de priorité P2 du deuxième flux média 310. La valeur du deuxième degré de priorité P2 du deuxième flux média 310 étant supérieure à la valeur du deuxième degré de priorité P2 du premier flux média 300, le dispositif appelant 10 sélectionne le deuxième flux média 310. La restitution du premier flux média 300 est alors interrompue et le deuxième flux média 310 est restitué à la place du premier flux média 300.

Ainsi, le dispositif appelant 10 peut restituer plusieurs flux média de manière séquentielle, chaque flux restitué étant associé à différentes phases de la procédure d'établissement de la communication (par exemple un flux média associé au réseau du dispositif appelant, puis un flux média associé au dispositif appelé, typiquement un PBX ou un SVI).

La réception de deux messages différents peut aussi être simultanée ou quasi simultanée (les deux messages sont reçus au même moment ou quasiment au même moment de la procédure d'établissement de la communication, avant la finalisation de l'établissement). La durée écoulée entre la réception d'un des deux messages et la réception quasi simultanée de l'autre message est typiquement de l'ordre de la seconde, cette durée étant ainsi beaucoup plus courte que la durée typique d'une réception séquentielle.

La sous étape 136 de comparaison des deuxièmes degrés de priorité P2 associés aux flux média associés aux messages reçus simultanément ou quasi-simultanément, ainsi qu'éventuellement du deuxième degré de priorité P2 associé à un flux média en train d'être restitué par le dispositif appelant 10, peut être mise en oeuvre avant une éventuelle restitution d'un des flux média associés aux messages reçus simultanément ou quasiment simultanément.

Une réception séquentielle d'un message peut suivre une réception simultanée ou quasisimultanée d'au moins deux messages, L'étape de sélection est alors mise en oeuvre une première fois pour les flux média associés aux messages reçus simultanément ou quasi-simultanément, en fonction des deuxièmes degrés de priorité associés à ces flux média, puis le flux média sélectionné peut être restitué. L'étape de sélection est ensuite mise en oeuvre une seconde fois pour le(s) flux média associé(s) au(x) message(s) reçu(s) ensuite (réception séquentielle), et le flux média précédemment sélectionné.

La **figure 4** illustre un exemple comprenant une réception d'un premier message 400 associé à un premier flux média 410, suivie d'une réception quasi simultanée d'un deuxième message 420 associé à un deuxième flux média 430 et d'un troisième message 440 associé à un troisième flux média 450. Dans cet exemple, l'utilisateur du dispositif appelant tente typiquement de contacter un autre utilisateur bénéficiant d'un service permettant de faire sonner simultanément deux dispositifs appelés (« simultaneous ringing » en terminologie anglo-saxonne), le premier dispositif appelé 30 étant par exemple un autocommutateur téléphonique privé PBX ou un serveur vocal interactif SVI d'une entreprise de l'autre utilisateur, et le deuxième dispositif appelé 30 étant par exemple le téléphone portable de l'autre utilisateur.

Dans une telle situation, l'utilisateur du dispositif appelant 10 devrait tout d'abord écouter la restitution du premier flux média, qui est associé à un serveur 40 du service et qui comprend une annonce indiquant typiquement qu'un correspondant est recherché, puis écouter la restitution du deuxième flux média, qui est associé à l'autocommutateur téléphonique privé PBX et qui comprend par exemple une description de l'entreprise et/ou un message d'attente.

La requête INVITE, envoyée par le dispositif appelant 10, est tout d'abord reçue par le serveur 40 du service, qui envoie le premier message 400 à destination du dispositif appelant 10, ainsi que le premier flux média 410. Le dispositif appelant 10 restitue alors le premier flux média 410, car il n'a à ce stade que le premier flux média 410 à restituer.

Le dispositif appelant 10 peut en outre rechercher un premier degré de priorité P1 associé au premier flux média 410 dans le premier message 400. On suppose dans cet exemple que le dispositif appelant 10 trouve dans le premier message 400 un premier degré de priorité P1 associé au premier flux média 410, la valeur de ce premier degré de priorité P1 étant de 0.5. La valeur du deuxième degré de priorité P2 associé au premier flux média 410 est alors égale à 0.5.

En parallèle, le serveur 40 du service transmet la requête INVITE à l'autocommutateur téléphonique privé PBX et au téléphone portable. L'autocommutateur téléphonique privé PBX envoie alors à destination du dispositif appelant 10 le deuxième message 420, ainsi que le deuxième flux média 430. De plus, le téléphone portable 30 envoie à destination du dispositif appelant 10 le troisième message 440, ainsi que le troisième flux média 450.

Le dispositif appelant 10 peut alors rechercher un premier degré de priorité P1 associé au deuxième flux média 430 dans le deuxième message 420, ainsi qu'un premier degré de priorité P1 associé au troisième flux média 450 dans le troisième message 440. On suppose dans cet exemple que le dispositif appelant 10 trouve dans le deuxième message 420 un premier degré de priorité P1 associé au deuxième flux média 430, la valeur de ce premier degré de priorité P1 étant de 0.7, et que le dispositif appelant 10 trouve dans le troisième message 440 un premier degré de priorité P1 associé au troisième flux média 450, la valeur de ce premier degré de priorité P1 étant de 0.6. La valeur du deuxième degré de priorité P2 associé au deuxième flux média 430 est alors égale à 0.7, et la valeur du deuxième degré de priorité P2 associé au troisième flux 450 est de 0.6.

Le dispositif appelant 10 compare alors la valeur du deuxième degré de priorité P2 du premier flux média 410, la valeur du deuxième degré de priorité du deuxième flux média 430 et la valeur du deuxième degré de priorité P2 du troisième flux média 450. La valeur du deuxième degré de priorité P2 du deuxième flux média 430 étant supérieure à la valeur du deuxième degré de priorité P2 du premier flux média 410 et à la valeur du deuxième degré de priorité P2 du troisième flux média 450, le dispositif appelant 10 sélectionne le deuxième flux média 430. La restitution du premier flux média 410 est alors interrompue et le deuxième flux média 430 est restitué à la place du premier flux média 410. Le troisième flux média 450 n'est pas restitué.

En revenant à la figure 1, chaque message reçu à l'étape de réception 110 peut être un message de signalisation ou un paquet de contrôle.

Dans le cas où le message reçu est un message de signalisation, le message peut être un message indiquant la présence d'un flux média, par exemple de type « SIP 183 In Progress » ou « SIP 180 Ringing ». Le premier degré de priorité P1 du flux média associé est ainsi recherché dans le message de signalisation. Plus précisément, le message peut comprendre un entête P-Early-Media (PEM) comprenant le premier degré de priorité P1. L'entête (« header », en terminologie anglo-saxonne) peut par exemple prendre la forme suivante : PEM:a=sendrecv;gate;P1=0.85.

Le message reçu peut être associé à un flux média envoyé au dispositif appelant 10 ou à un flux média préenregistré dans la mémoire morte ou vive du dispositif appelant 10, typiquement le flux média RBT.

Le message « SIP 180 Ringing » indique par exemple au dispositif appelant 10 de restituer le flux média préenregistré, tandis que le message « SIP 183 In Progress » indique au dispositif appelant de restituer un flux média envoyé au dispositif appelant 10.

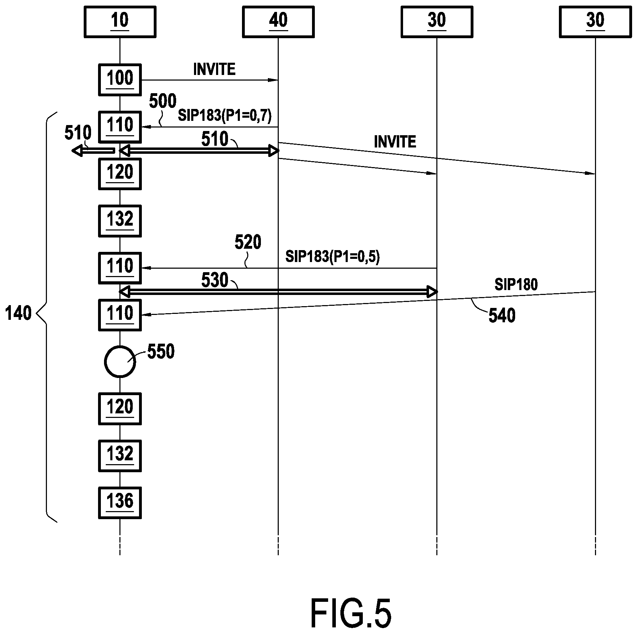

La **figure 5** illustre un exemple comprenant une réception d'un premier message de type « SIP 183 In Progress » 500 associé à un premier flux média 510, suivie d'une réception quasi simultanée d'un deuxième message de type « SIP 183 In Progress » 520 associé à un deuxième flux média 530 et d'un troisième message de type « SIP 180 Ringing » 540 associé à un troisième flux média 550.

Dans cet exemple, l'utilisateur du dispositif appelant tente typiquement de contacter un autre utilisateur bénéficiant d'un service permettant de faire sonner simultanément deux dispositifs appelés (« simultaneous ringing » en terminologie anglo-saxonne), le premier dispositif appelé 30 bénéficiant en outre d'un service permettant à l'utilisateur de choisir un flux média personnalisé CRBT (pour « Color Ring Back Tone »), tandis que le deuxième dispositif appelé 30 ne bénéficie pas d'un tel service.

Dans une telle situation, l'utilisateur du dispositif appelant 10 devrait tout d'abord écouter la restitution du premier flux média, qui est associé à un serveur 40 du service permettant de faire sonner simultanément deux dispositifs appelés, puis écouter la restitution du deuxième flux média, qui est associé au premier dispositif appelé 30.

La requête INVITE, envoyée par le dispositif appelant 10, est tout d'abord reçue par le serveur 40 du service, qui envoie le premier message 500 à destination du dispositif appelant 10, ainsi que le premier flux média 510. Le dispositif appelant 10 restitue alors le premier flux média 510, car il n'a à ce stade que le premier flux média 510 à restituer.

Le dispositif appelant 10 peut en outre rechercher un premier degré de priorité P1 associé au premier flux média 510 dans le premier message 500. On suppose dans cet exemple que le dispositif appelant 10 trouve dans le premier message 500 un premier degré de priorité P1 associé au premier flux média 510, la valeur de ce premier degré de priorité P1 étant de 0.7. La valeur du deuxième degré de priorité P2 associé au premier flux média 510 est alors égale à 0.7.

En parallèle, le serveur 40 du service transmet la requête INVITE aux premier et deuxième dispositifs appelés 30. Le premier dispositif appelé 30 envoie alors à destination du dispositif appelant 10 le deuxième message 520, ainsi que le deuxième flux média 530. De plus, deuxième dispositif appelé 30 envoie à destination du dispositif appelant 10 le troisième message 540 indiquant au dispositif appelant 10 de restituer le troisième flux média 550, qui est préenregistré dans la mémoire morte ou vive du dispositif appelant 10.

Le dispositif appelant 10 peut alors rechercher un premier degré de priorité P1 associé au deuxième flux média 530 dans le deuxième message 520, ainsi qu'un premier degré de priorité P1 associé au troisième flux média 550 dans le troisième message 540.

On suppose, dans cet exemple, que le dispositif appelant 10 trouve dans le deuxième message 520 un premier degré de priorité P1 associé au deuxième flux média 530, la valeur de ce premier degré de priorité P1 étant de 0.5, et que le dispositif appelant 10 ne trouve pas dans le troisième message 540 un premier degré de priorité P1 associé au troisième flux média 550. La valeur du deuxième degré de priorité P2 associé au deuxième flux média 530 est alors égale à 0.5, et la valeur du deuxième degré de priorité P2 associé au troisième flux 550 est de 0.0.

Le dispositif appelant 10 compare alors la valeur du deuxième degré de priorité P2 du premier flux média 510, la valeur du deuxième degré de priorité du deuxième flux média 530 et la valeur du deuxième degré de priorité P2 du troisième flux média 550. La valeur du deuxième degré de priorité P2 du premier flux média 510 étant supérieure à la valeur du deuxième degré de priorité P2 du deuxième flux média 530 et à la valeur du deuxième degré de priorité P2 du troisième flux média 550, le dispositif appelant 10 sélectionne le premier flux média 510. La restitution du premier flux média 510 n'est alors pas interrompue et les deuxième et troisième flux média 530, 550 ne sont pas restitués.

En revenant à la figure 1, l'étape de recherche 120 peut comprendre, pour chaque message de signalisation reçu de type « SIP 183 In Progress », une identification du flux média associé au message de signalisation reçu, en comparant la valeur d'une donnée du message de signalisation avec la valeur d'une donnée du flux média associé au message de signalisation.

Plus précisément, la valeur d'une donnée du message de signalisation peut être comparée avec la valeur d'une donnée correspondante de chaque flux média, jusqu'à ce que le flux média correspondant soit identifié. Le flux média correspondant est identifié lorsque la valeur de la donnée du message de signalisation correspond à la valeur de la donnée correspondante du flux média.

Les données comparées peuvent être une adresse IP et un numéro de port présents dans le message de signalisation, associés à l'émetteur du flux média, avec une adresse IP et un numéro de port du flux média, associés à l'émetteur du flux média.

Plus précisément, dans le cas où le message de signalisation est une réponse SDP ou offre SDP, c'est l'adresse IP source et le numéro de port UDP source du premier paquet RTP early media reçu du flux média qui est comparé avec le contenu SDP reçu dans le message de signalisation (l'adresse IP du champ « c » pour « connection information » et le numéro de port UDP dans le champ « m », pour « media », déclarant le codées - voir document RFC 4566).

Le message de signalisation peut être une offre SDP lorsque la requête INVITE ne comprend pas d'offre SDP. Le dispositif appelant 10 envoie alors un message SIP PRACK comprenant une réponse SDP comprenant typiquement le choix du codec et du tramage, de sorte à dimensionner correctement la file de mémorisation RTP du flux média.

En variante, les données comparées peuvent être des identifiants de source de synchronisation SSRC (pour « Synchronization SouRCe », en terminologie anglo-saxonne). Cet identifiant de 32 bits, présent dans le flux média, peut en effet être ajouté au message de signalisation associé au flux média.

Dans ce deuxième cas, l'entête P-Early-Media du message de signalisation comprend l'identifiant SSRC présent dans l'entête des paquets RTP identifiant le flux RTP.

L'entête peut alors par exemple prendre la forme suivante : PEM:a=sendrecv;gate;p=0.85;SSRC=123456789.

Cette variante permet d'identifier le flux média associé au message de signalisation reçu même lorsque l'adresse IP et le numéro de port présents dans le message de signalisation, initialement associés à l'émetteur du flux média, sont remplacés par l'adresse IP et le numéro de port d'un équipement réseau intermédiaire (c'est-à-dire un équipement réseau entre l'émetteur du message de signalisation et le dispositif appelant), typiquement un serveur A-SBC (« Access Session Border Controler » en terminologie anglo-saxonne) mettant en oeuvre une fonction dite de « typology Hidding » et/ou de « merge » de flux média en utilisant les mêmes adresse IP source et numéro de port source pour transmettre les différents flux média, chaque flux média étant identifié par le champ SSRC .

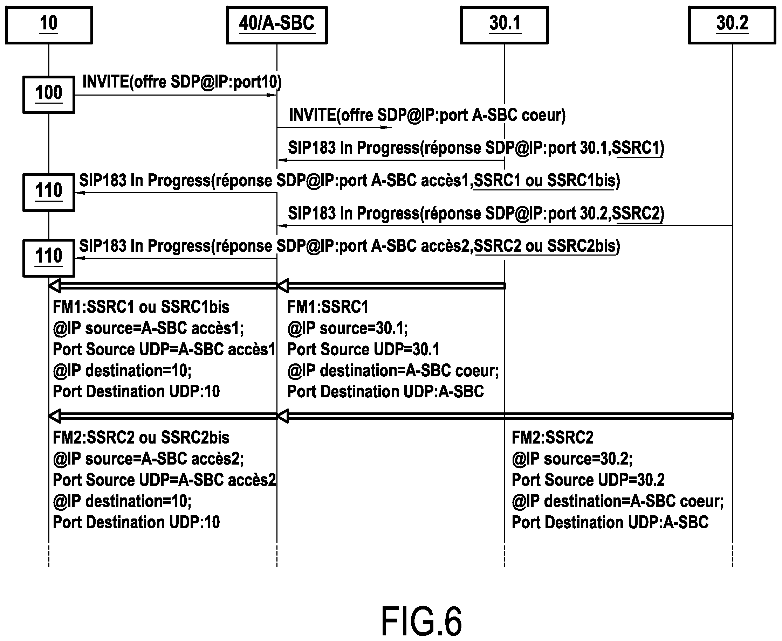

La **figure 6** illustre un exemple dans lequel des identifiants SSRC sont utilisés par le dispositif appelant 10 afin d'identifier des flux associés à des messages reçus.

La requête INVITE envoyée par le dispositif appelant 10 est reçue par un serveur A-SBC, qui transmet la requête INVITE à deux dispositifs appelés 30.1 et 30.2. Chaque dispositif appelé 30.1 et 30.2 va alors envoyer un message de signalisation de type « SIP 183 In Progress » comprenant l'adresse IP et un numéro de port du dispositif appelé 30.1, 30.2, ainsi qu'un identifiant SSRC.

Le serveur A-SBC reçoit chaque message de signalisation, et, pour chaque message, remplace l'adresse IP et le numéro de port du dispositif appelé 30.1 et 30.2 par l'adresse IP et un numéro de port du serveur A-SBC.

Le serveur A-SBC envoie ensuite chaque message ainsi modifié au dispositif appelant 10. Chaque dispositif appelé 30.1 et 30.2 envoie en outre un flux média FM1, FM2, chaque flux comprenant un identifiant SSRC, l'adresse IP et un numéro de port du dispositif appelé 30.1 et 30.2.

Chaque flux média FM1, FM2 est reçu par le serveur A-SBC, qui remplace l'adresse IP et un numéro de port du dispositif appelé par l'adresse IP et un numéro de port du serveur A-SBC. Le serveur A-SBC envoie ensuite chaque flux FM1, FM2 ainsi modifié au dispositif appelant 10. Le dispositif appelant 10 peut alors retrouver le message de signalisation correspondant à chaque flux média FM1, FM2 reçu en comparant les identifiants SSRC des messages de signalisation et des flux média FM1, FM2.

L'identifiant SSRC associé à un flux média est en effet toujours distinct de l'identifiant SSRC associé à un autre flux média (alors que le serveur A-SBC peut utiliser la même adresse IP et le même port pour transmettre les deux flux média).

En variante, le serveur A-SBC peut modifier les identifiants SSRC des messages de signalisation reçus avant d'envoyer les messages ainsi modifiés au dispositif appelant 10. Dans ce cas, le serveur A-SBC modifie de la même manière des identifiants SSRC des flux média FM1, FM2 reçus avant d'envoyer ces flux FM1, FM2 ainsi modifiés au dispositif appelant 10, de sorte que le dispositif appelant 10 puisse retrouver le message de signalisation correspondant à chaque flux média FM1, FM2 reçu en comparant les identifiants SSRC des messages de signalisation et des flux média FM1, FM2.

Lorsque le message reçu est un paquet de contrôle, le premier degré de priorité P1 est recherché dans ledit paquet de contrôle. Le paquet de contrôle peut comprendre l'identifiant SSRC permettant d'associer le paquet de contrôle au flux média correspondant. Le paquet de contrôle est par exemple un paquet RTCP (pour « Real Time Control Protocol », en terminologie anglo-saxonne) de type APP (pour « APPlication », en terminologie anglo-saxonne).

Lorsqu'un dispositif de traduction 40, mettant en oeuvre une traduction d'adresse réseau du dispositif appelant 10 (par exemple mettant en oeuvre une fonction NAPT ou « Network Address Port Translation », en terminologie anglo-saxonne) est positionné dans le réseau 20 entre le dispositif appelant 10 et un dispositif appelé 30, il est nécessaire, pour chaque flux média envoyé au dispositif appelant 10, de créer une entrée au niveau du dispositif de traduction 40 permettant de réceptionner ledit flux média. En effet, si l'entrée n'est pas créée au niveau du dispositif de traduction 40, le dispositif de traduction 40 ne peut recevoir le flux et le transférer au dispositif appelant 10. Le dispositif de traduction 40 est par exemple un équipement CGN (Carrier-grade NAT), ou encore un équipement de terminaison de réseau (une « Box »), cet équipement et le dispositif appelant 10 étant connectés via un réseau local (LAN, pour « Local Area Network »). Le réseau de communication 20 comprend alors le réseau local et un réseau étendu, le dispositif de traduction assurant la liaison entre le réseau local et le réseau étendu.

L'étape de recherche peut alors comprendre une sous-étape de réception d'au moins un flux de la pluralité de flux média comprenant :
une détection du dispositif de traduction 40, et
pour chaque flux média, un envoi d'une donnée transitant par ledit dispositif de traduction 40, de sorte à créer une entrée au niveau du dispositif de traduction 40 permettant de réceptionner ledit flux média.

Le dispositif appelant 10 peut détecter le dispositif de traduction après réception d'un message de signalisation, en analysant par exemple le contenu d'un champ SIP « Via » du message de signalisation afin d'y détecter un paramètre SIP « received », typiquement le paramètre received=@IP WAN (pour « Wide Area Network ») du dispositif de traduction 40.

Le dispositif appelant 10 envoie alors, immédiatement après chaque réception d'un message de signalisation de type « SIP 183 In Progress » (indiquant ainsi qu'un flux média est envoyé au dispositif appelant 10), une donnée sous forme de paquet RTP vers l'adresse IP et le numéro de port UDP présents dans le message de signalisation au niveau du protocole SDP, de sorte à créer une entrée appelée entrée NAT (pour « Network Address Translation ») apte à réceptionner le flux, au niveau du dispositif de traduction 40.

L'envoi du paquet RTP ne tient pas compte de la valeur du paramètre a=sendrecv/sendonly/... du message de signalisation reçu ni du paramètre de priorité P1 éventuellement présent et/ou de la présence éventuelle d'identifiant SSRC de flux média.

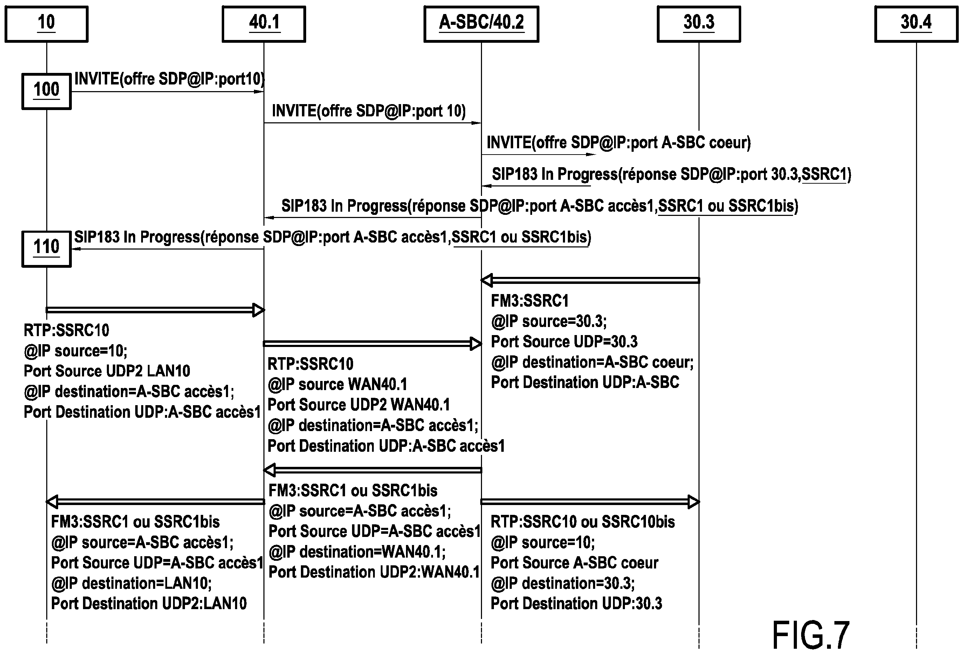

La **figure 7** illustre un exemple dans lequel le terminal appelant 10 est connecté via un réseau local à un équipement de terminaison de réseau 40.1, cet équipement de terminaison de réseau 40.1 étant connecté à un réseau étendu comprenant en outre un serveur A-SBC 40.2, un premier dispositif appelé 30.3 et un deuxième dispositif appelé 30.4.

Le dispositif appelant 10 envoie une requête INVITE transportée par un paquet IP comprenant un champ @IP :port source1 LAN 10, cette requête étant reçue par l'équipement de terminaison de réseau 40.1 (i.e. le dispositif de traduction). L'équipement de terminaison de réseau 40.1 remplace alors la valeur du champ @IP :port source1 LAN 10 par @IP :port source1 WAN 40.1, et transmet la requête ainsi modifiée au serveur A-SBC 40.2.

Sous réception de la requête, le serveur A-SBC 40.2 détecte que la valeur de ce champ est différente de l'adresse IP contenue dans le corps de la requête (SDP) et détecte ainsi la présence de l'équipement de terminaison de réseau 40.1. Le serveur A-SBC 40.2 insère alors dans le champ SIP « Via » le paramètre « received @IP :port source1 WAN 40.1 » afin de router correctement les réponses SIP, et remplace, dans le corps de la requête (SDP), l'adresse IP et le numéro de port du dispositif appelant 10 par l'adresse IP et un numéro de port du serveur A-SBC (correspondant à une interface réseau coté équipements appelés). Le serveur A-SBC envoie ensuite la requête ainsi modifiée aux premier et deuxième dispositifs appelés 30.3, 30.4.

Lorsque le premier dispositif appelé 30.3 reçoit la requête INVITE modifiée par l'équipement de terminaison de réseau 40.1 et le serveur A-SBC 40.2, le premier dispositif appelé 30.3 envoie un message de signalisation de type « SIP 183 In Progress » comprenant l'adresse IP et un numéro de port du dispositif appelé 30.3, ainsi qu'un identifiant SSRC1.

Le serveur A-SBC 40.2 reçoit le message de signalisation, puis remplace l'adresse IP et le numéro de port du dispositif appelé 30.3 par l'adresse IP et un numéro de port du serveur A-SBC 40.2 (correspondant à une interface réseau coté équipement de terminaison de réseau 40.1). Le serveur A-SBC envoie ensuite le message de signalisation modifié à l'équipement de terminaison de réseau 40.1.

L'équipement de terminaison de réseau 40.1 remplace alors la valeur WAN 40.1 champ @IP :port destination1 du paquet IP par @IP :port destination 1 LAN 10, et envoie le message de signalisation modifié au dispositif appelant 10.

Le premier dispositif appelé 30.3 envoie en outre un flux média FM3 comprenant un identifiant SSRC, l'adresse IP et un numéro de port du premier dispositif appelé 30.3. Le flux média FM3 est reçu par le serveur A-SBC 40.2 et reste bloqué au niveau du serveur A-SBC 40.2 car le serveur A-SBC 40.2 ne sait pas encore vers quel port de l'équipement de terminaison de réseau 40.1 le flux média FM3 doit être envoyé puisque l'entrée NAPT du flux média n'y est pas encore créée.

Sous réception du message de signalisation modifié, le dispositif appelant 10 envoie un paquet RTP vers l'adresse IP et le numéro de port UDP du serveur A-SBC 40.2, de sorte à créer une entrée NAPT apte à réceptionner le flux FM3 au niveau de l'équipement de terminaison de réseau 40.1.

Le paquet RTP comprend en outre l'adresse IP et le numéro de port du dispositif appelant 10, que l'équipement de terminaison de réseau 40.1 remplace par l'adresse IP et un numéro de port de l'équipement de terminaison de réseau 40.1 avant d'envoyer le paquet modifié au serveur A-SBC 40.2.

La réception du paquet RTP par le serveur A-SBC 40.2 déclenche l'envoi du flux média FM3 vers l'entrée NAPT créée. L'équipement de terminaison de réseau 40.1 transmet ensuite le flux média FM3 au dispositif appelant 10.

En parallèle, le serveur A-SBC 40.2 transmet le paquet RTP au premier dispositif appelé 30.3.

De même, lorsque le deuxième dispositif appelé 30.4 reçoit la requête INVITE modifiée par l'équipement de terminaison de réseau 40.1 et le serveur A-SBC 40.2, le deuxième dispositif appelé 30.4 envoie un message de signalisation de type « SIP 183 In Progress » comprenant l'adresse IP et un numéro de port du deuxième dispositif appelé 30.4, ainsi qu'un identifiant SSRC2. Les étapes décrites ci-dessus sont alors mises en oeuvre pour transmettre le message de signalisation et le flux média du deuxième dispositif appelé 30.4.

Revenant à la figure 1, l'étape de réception peut comprendre une réception d'un message, dit troisième message, reçu en réponse à la requête d'établissement de la communication, déclenchant une sous-étape d'enregistrement, dans une mémoire du dispositif appelant 10, de chaque flux média reçu par le dispositif appelant 10.

Le troisième message est par exemple le message reçu en premier par le dispositif appelant 10, en réponse à la requête d'établissement de la communication, ou le message reçu en premier par le dispositif appelant 10 suite à une mise en oeuvre de l'étape de restitution 140.

La sous-étape d'enregistrement est mise en oeuvre pendant une durée prédéterminée commençant à la réception du troisième message. Chaque flux média reçu est par exemple mémorisé dans des files distinctes, dans la mémoire vive du dispositif appelant 10. La valeur maximale de la durée prédéterminée peut être par exemple de 1 seconde.

La valeur de la durée prédéterminée peut dépendre de la valeur du deuxième degré de priorité P2 obtenu en fonction du résultat de la recherche dans ledit troisième message. Typiquement, plus la valeur du deuxième degré de priorité P2 est grande, plus la valeur de la durée prédéterminée est petite. Cette valeur peut par exemple être calculée avec la formule suivante : D = 1.0 - P2, ou D est la durée et P2 le deuxième degré de priorité. L'enregistrement est alors effectué uniquement lorsque la valeur du deuxième degré de priorité est inférieure à 1.0.

En variante, la valeur de la durée prédéterminée peut être fixe ou basée sur tout type d'équation mathématiques.

L'étape de sélection 130 est mise en oeuvre lorsque la durée prédéterminée est écoulée. La sélection du flux FM à la fin de la durée prédéterminée permet de gérer l'arrivée asynchrone de plusieurs messages reçus par le dispositif appelant 10 en réponse à la requête INVITE. En effet, le dispositif appelant 10 ne dispose d'aucune information sur le nombre de messages qu'il peut recevoir en réponse à cette requête, et les délais de transit des messages peuvent différer.

De plus, faire dépendre la valeur de la durée prédéterminée de la valeur du deuxième degré de priorité P2 permet d'améliorer l'expérience de l'utilisateur du dispositif appelant en limitant le délai entre l'envoi de la requête INVITE et la restitution de la première information de flux média, de sorte à ne pas laisser l'utilisateur dans le « vide/blanc ».

En effet, plus l'équipement 30, 40 générant le flux média est proche du dispositif appelant 10, moins les délais réseaux sont importants pour recevoir le message, et moins la probabilité de recevoir d'autres messages liés à d'autre flux média est importante.

Le flux média FM sélectionné peut alors être restitué depuis la mémoire vive du dispositif appelant 10, ce qui permet de ne pas tronquer l'information contenue dans ce flux média.

Le dispositif appelant 10 peut en parallèle continuer à enregistrer le flux média FM sélectionné. De plus, le dispositif appelant 10 peut cesser d'enregistrer les autres flux média et les parties des autres flux média enregistrés peuvent être supprimés de la mémoire vive du dispositif appelant 10.

La restitution du flux média peut être accélérée, de sorte que la durée de la restitution est diminuée de la durée prédéterminée.

Les paquets de flux média mémorisés sont ainsi restitués de manière accélérée, pour rattraper la durée écoulée.

Cette restitution accélérée permet de retrouver un aspect temps réel lorsque l'utilisateur du dispositif appelé 30 accepte l'appel. En effet, la restitution accélérée permet de ne pas tronquer l'information du flux média (par exemple, dans le cas d'une annonce vocale, il y a ainsi moins de risque de répéter cette annonce vocale), tout en optimisant les ressources mémoire du dispositif appelant 10.

Le procédé peut comprendre une étape (non représentée) de détection d'un type d'appel (ou détection d'un type de session SIP), les étapes de recherche 120 d'un premier degré de priorité P1 et de sélection 130 d'un flux média FM étant mises en oeuvre si le type de l'appel est standard.

L'appel est standard lorsque le numéro composé est différent d'un numéro d'urgence. Le dispositif appelant 10 détecte le type d'appel au moyen du numéro composé ou au moyen d'une information réseau indiquant que l'appel est un appel d'urgence.

Lorsque l'appel est un appel d'urgence, le dispositif appelant 10 devrait recevoir qu'un seul flux média, car tous les services sont débrayés pour ce type d'appel, de sorte à éviter les interactions de services et s'assurer que l'appel est acheminé au plus vite. Le dispositif appelant 10 restitue alors immédiatement le flux média reçu (qui peut comprendre par exemple une annonce de dissuasion).

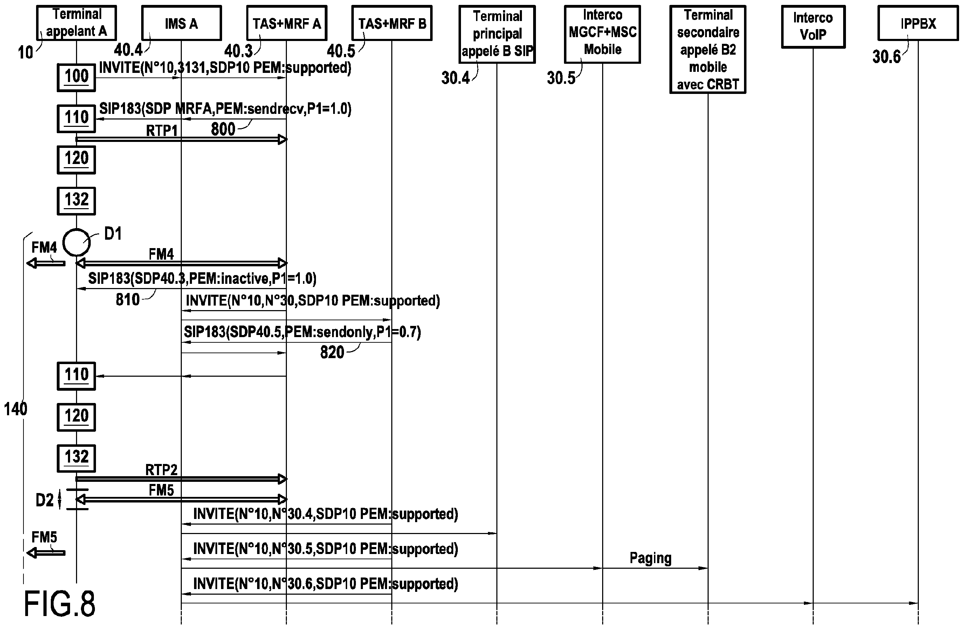

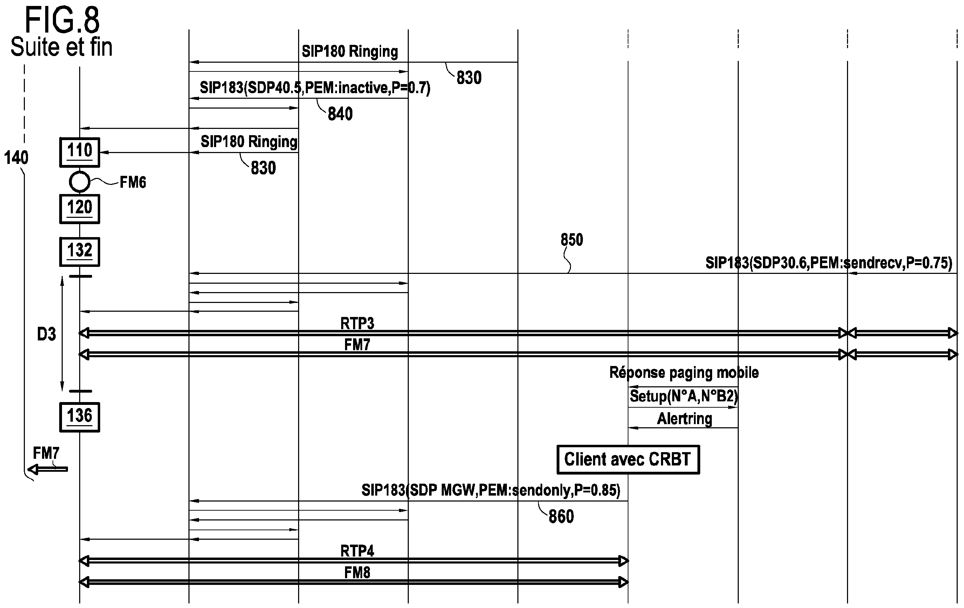

La **figure 8** illustre un exemple de mise en oeuvre du procédé de l'invention, dans lequel l'utilisateur du dispositif appelant 10 contacte tout d'abord un service de rappel du dernier appelant.

Dans cet exemple, le dispositif appelant 10 détecte que l'appel est un appel standard. La requête INVITE envoyée par le dispositif appelant 10 est reçue par un serveur 40.3 lié à un service concernant le dispositif appelant 10 (appelé « service opérateur originating »), gérant le service de rappel du dernier appelant (typiquement un serveur « TAS » pour « Telephony Application Server »), qui envoie en réponse un premier message 800 de type « SIP 183 In Progress », le premier message 800 comprenant un premier degré de priorité P1 de valeur 1.0 associé à un premier flux média FM4.

Le dispositif appelant 10 analyse le champ SIP « Via » du premier message 800 et détecte un paramètre SIP « received » dans ce champ. Le dispositif appelant 10 envoie alors au moins un paquet RTP1 vers le serveur 40.3 gérant le service de rappel du dernier appelant, afin de créer une entrée NAPT au niveau d'un dispositif de traduction 40.4 (typiquement un dispositif de coeur de réseau IMS du réseau de l'appelant) positionné dans le réseau entre le dispositif appelant 10 et le serveur 40.3, afin de réceptionner le premier flux FM4.

La réception du premier message 800 déclenche le calcul d'une première durée D1 d'enregistrement de flux. Le deuxième degré de priorité P2 obtenu étant égal au premier degré P1 du premier message 800 et donc égal à 1.0, la première durée D1 est de 0 secondes et l'enregistrement n'est pas mis en oeuvre.

Le dispositif appelant 10 sélectionne alors le premier flux média FM4, qui est envoyé par le serveur 40.3, et le restitue en temps réel, ce qui permet à l'utilisateur d'écouter une annonce indiquant typiquement la date et heure du dernier appel, ainsi que le numéro du dernier appelant et l'indication d'une commande à effectuer si l'utilisateur souhaite appeler ce dernier appelant. Cette annonce est typiquement restituée pendant une durée de l'ordre de 10 secondes.

L'utilisateur effectue la commande indiquée, et le dispositif appelant 10 cesse de restituer le premier flux média FM4, par exemple après avoir reçu un deuxième message 810 envoyé par le serveur 40.3 comprenant un entête PEM ayant un paramètre attribut a=inactive.

Le serveur 40.3 prolonge ou route la demande d'appel vers le réseau du destinataire, le destinataire disposant du service de renvoi d'appel simultané mise en oeuvre par un serveur 40.5 (gérant des « services opérateur terminating », typiquement un serveur « TAS »). Le serveur 40.5 envoie un troisième message 820 de type « SIP 183 In Progress », comprenant un premier degré de priorité de valeur 0.7 associé à un deuxième flux média FM5, typiquement environ 1 seconde après la fin de la restitution du premier flux FM4.

Sous réception de ce troisième message 820, le dispositif appelant 10 envoie un paquet RTP2 vers le serveur 40.5, afin de créer une entrée NAPT permettant de réceptionner le deuxième flux FM5.

Le dispositif appelant 10 calcule en outre une deuxième durée D2 d'enregistrement à partir du deuxième degré de priorité P2 obtenu à partir de la recherche dans le troisième message 820. La deuxième durée D2 étant de 0.3 secondes, le dispositif appelant 10 enregistre alors les flux reçus pendant cette durée de 0.3 secondes.

En parallèle, le serveur 40.5 envoie trois requêtes INVITE à trois dispositifs appelés 30.4, 30.5 et 30.6 correspondant au dernier appelant, et le dispositif appelant 10 reçoit le deuxième flux FM5.

A la fin de la deuxième durée D2 d'enregistrement, le dispositif appelant 10 restitue le deuxième flux FM5, car seul ce deuxième flux FM5 a été mémorisé. L'utilisateur écoute alors une annonce, typiquement destinée à le faire patienter.

Le dispositif 40.5 reçoit un message 830 de type « SIP 180 Ringing » envoyé par le premier dispositif appelé 30.4, puis peut envoyer un message 840 comprenant un entête PEM ayant un paramètre a=inactive au dispositif appelant 10 de sorte que celui-ci cesse la restitution du deuxième flux FM5.

Le dispositif de traduction 40.4 transfère aussi le message 830 de type « SIP 180 Ringing » au dispositif appelant 10, qui calcule une troisième durée D3 d'enregistrement. Le message 830 de type « SIP 180 Ringing » ne comprenant pas de premier degré de priorité, le dispositif appelant 10 obtient alors un deuxième degré de priorité P2 associé à un quatrième flux média FM6 préenregistré dans la mémoire morte ou vive du dispositif appelant 10, ce deuxième degré de priorité P2 ayant une valeur prédéterminée de 0.0. Le dispositif appelant 10 commence donc le troisième enregistrement, la troisième durée D3 de cet enregistrement étant de 1.0 seconde.

Le dispositif appelant 10 reçoit en parallèle un message 850 de type « SIP 183 In Progress » envoyé par le deuxième dispositif appelé 30.6, comprenant un premier degré de priorité de 0.75 associé à un quatrième flux média FM7, et envoie un paquet RTP3 vers le deuxième dispositif appelé 30.6, afin de créer une entrée NAPT permettant de réceptionner le quatrième flux FM7. Le dispositif appelant 10 réceptionne ensuite le quatrième flux FM7, et l'enregistre.

A la fin de la troisième durée D3 d'enregistrement, le dispositif appelant 10 sélectionne et restitue le quatrième flux FM7, car le quatrième flux FM7 est associé à un deuxième degré de priorité P2 supérieur au deuxième degré P2 associé au troisième flux FM6. L'utilisateur écoute alors typiquement une annonce de temps d'attente, pouvant indiquer que tous les correspondants sont occupés.

Le dispositif appelant 10 reçoit en parallèle un message 860 de type « SIP 183 In Progress » envoyé par le troisième dispositif appelé 30.5, comprenant un premier degré de priorité de 0.85 associé à un cinquième flux média FM8, et envoie un paquet RTP4 vers le troisième dispositif appelé 30.5, afin de créer une entrée NAPT permettant de réceptionner le cinquième flux FM8. Le dispositif appelant 10 réceptionne ensuite le cinquième flux FM8, et l'enregistre, car ce cinquième flux FM8 pourrait être restitué à la place du quatrième flux FM7 si le dispositif appelant 10 cesse de restituer le quatrième flux FM7.

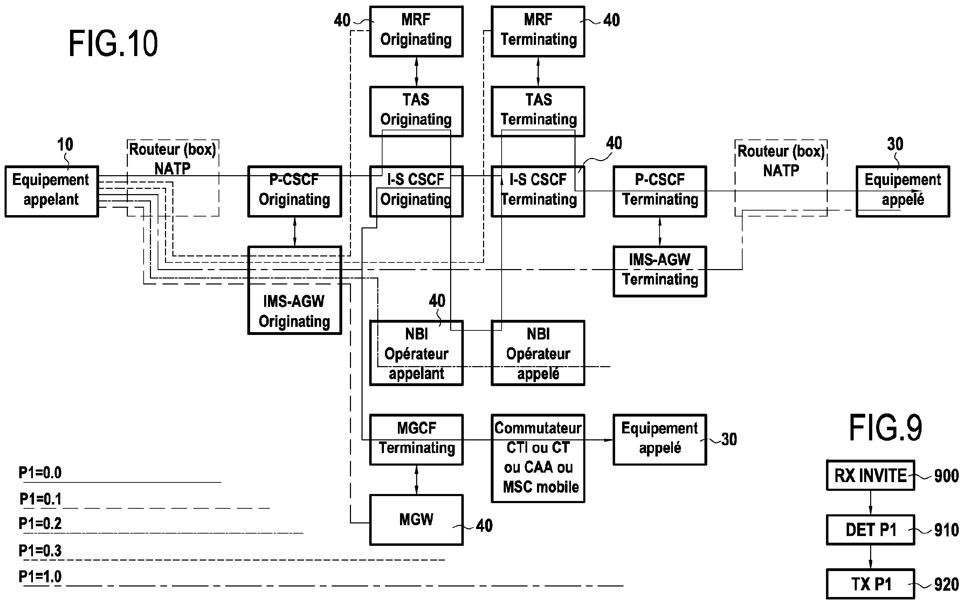

La **figure 9** représente, sous forme d'organigramme, les principales étapes d'un procédé de gestion d'au moins un flux média destiné à être restitué par un dispositif appelant (tel que le dispositif appelant 10 de la figure 2) avant la finalisation de l'établissement d'une communication, selon un exemple de mode de réalisation non couvert par le texte des revendications, mais utile à la compréhension de l'invention.

Ce procédé peut être mis en oeuvre par un système comprenant un dispositif appelé 30 et/ou un équipement réseau intermédiaire 40 aptes à envoyer un message comprenant une indication sur la présence d'un flux média, par exemple un dispositif appelé 30 et/ou un équipement réseau intermédiaire 40 représentés à la figure 2.

Le dispositif appelé 30 a l'architecture matérielle d'un ordinateur. Il comporte notamment un processeur, une mémoire morte, une mémoire vive et une mémoire flash non volatile non représentés, ainsi que des moyens de communication 32 par lesquels il est relié au réseau de communication 20.

De même, l'équipement réseau intermédiaire 40 a l'architecture matérielle d'un ordinateur. Il comporte notamment un processeur, une mémoire morte, une mémoire vive et une mémoire flash non volatile non représentés, ainsi que des moyens de communication 42 par lesquels il est relié au réseau de communication 20.

Pour chaque flux média géré par le système, le dispositif appelé 30 ou l'équipement réseau intermédiaire 40 détermine, dans une étape 910, un premier degré de priorité P1.

Cette détermination fait par exemple suite à la réception (étape 900) d'une requête d'établissement d'une communication, telle que la requête INVITE envoyée à l'étape 100 d'envoi du procédé de la figure 1.

Le premier degré de priorité P1 est typiquement déterminé en fonction de l'importance du flux média associé et/ou la distance réseau entre le dispositif appelant 10 et un dispositif réseau associé audit flux, typiquement un dispositif réseau envoyant le flux média au dispositif appelant 10, ce dispositif réseau pouvant être le dispositif appelé 30.

La distance réseau entre le dispositif appelant 10 et le dispositif réseau associé au flux est par exemple le nombre de sauts/noeuds (« hops ») entre ces deux équipements réseau, c'est-à-dire le nombre d'équipements par lesquels transite un paquet pour aller du dispositif appelant 10 au dispositif réseau associé au flux.

La distance réseau entre le dispositif appelant 10 et le dispositif réseau associé au flux peut correspondre au nombre de dialogues SIP entre le dispositif appelant 10 et un dispositif réseau associé au flux. Un dialogue SIP est présent entre deux agents SIP (« User Agent SIP »), un agent SIP étant localisé dans les dispositifs appelant 10 et appelé 30 puis au sein de chaque équipement réseau SIP mettant en oeuvre une fonction de « back2back User Agent » ou « B2BUA », c'est-à-dire deux agents tête bêche. Une telle fonction se trouve par exemple dans un dispositif A-SBC, I-SBC (pour « Interconnect Session Border Controller »), ou TAS (pour « Telephony Application Server »).

Une autre possibilité, pour le protocole SIP, est que la distance réseau corresponde au nombre de noeuds SIP entre le dispositif appelant 10 et un dispositif réseau associé au flux. Chaque noeud SIP traversé et réexpédiant la requête SIP avec ou sans modification (B2BUA, Proxy, User Agent) décrémente de 1 la valeur du header SIP MAX-FORWARD, le dispositif appelant 10 valorisant cette valeur à 70 conformément au standard SIP défini par la RFC3261 à l'IETF.

Le premier degré de priorité P1 est par exemple déterminé de sorte que plus la distance réseau est grande, plus la valeur du premier degré de priorité P1 est petite.

La valeur du premier degré de priorité P1 associé à un serveur 40 lié à un service concernant le dispositif appelant 10 (appelé « service opérateur originating »), par exemple un équipement réseau TAS (pour « Telephony Application Server ») ou MRF peut être supérieure à la valeur du premier degré de priorité associé à un équipement 40 d'interconnexion d'un réseau ISUP (pour « ISDN User Part », où « ISDN » est l'acronyme de Integrated Services Digital Network) ou BICC (pour « Bearer Independent Call Control), tel qu'un équipement MGCF (pour « Media Gateway Control Function ») ou un équipement MGW (pour « Media Gateway »).

De plus, la valeur du premier degré de priorité associé à un équipement 40 d'interconnexion d'un réseau ISUP ou BICC peut être supérieure à la valeur du premier degré de priorité P1 associé à un équipement 40 d'interconnexion d'un réseau VoIP, tel qu'un équipement I-SBC (pour « Interconnect Session Border Controler ») ou NBI (pour « Network Border Interconnect »).

De plus, la valeur du premier degré de priorité P1 associé à un équipement 40 d'interconnexion d'un réseau VoIP peut être supérieure à la valeur du premier degré de priorité P1 associé à un serveur 40 lié à un service concernant le dispositif appelé 30 (appelé « service opérateur terminating »), par exemple un équipement réseau TAS ou MRF.

De plus, la valeur du premier degré de priorité P1 associé à un serveur 40 lié à un service concernant le dispositif appelé 30 peut être supérieure à la valeur du premier degré de priorité P1 associé au dispositif appelé 30.

La valeur du premier degré de priorité P1 est par exemple comprise entre :
- 0.9 et 1.0 lorsque le premier degré de priorité P1 est associé à un serveur 40 lié à un service concernant le dispositif appelant 10,
- 0.8 et 0.9 lorsque le premier degré de priorité P1 est associé à un équipement 40 d'interconnexion d'un réseau ISUP ou BICC,
- 0.7 et 0.8 lorsque le premier degré de priorité P1 est associé à un équipement 40 d'interconnexion d'un réseau VoIP,
- 0.4 et 0.7 lorsque le premier degré de priorité P1 est associé à un serveur 40 lié à un service concernant le dispositif appelé 30,
- 0.2 et 0.4 lorsque le premier degré de priorité P1 est associé à un serveur 40 lié à un service concernant un ensemble de dispositifs comprenant le dispositif appelé 30, et/ou
- 0.0 et 0.2 lorsque le premier degré de priorité P1 est associé au dispositif appelé 30.

Comme le montre la **figure 10****,** le premier degré de priorité P1 peut aussi être déterminé de sorte que plus la distance réseau est grande, plus la valeur du premier degré de priorité P1 est grande. La figure 10 illustre d'autres exemples de distance réseau, pour divers équipements réseau 30, 40. Comme le montre cette figure :
- un équipement réseau de type dispositif appelant ou « TAS Originating » pilotant un MRF peut être associé à un premier degré de priorité de valeur égale à 0.0,
- un équipement réseau de type MGCF pilotant une MGW peut être associé à un premier degré de priorité de valeur égale à 0.1,
- un équipement réseau de type NBI peut être associé à un premier degré de priorité de valeur égale à 0.2,
- un équipement réseau de type dispositif appelé ou « TAS Terminating » pilotant un MRF peut être associé à un premier degré de priorité de valeur égale à 0.3, et/ou
- un équipement de type dispositif appelé peut être associé à un premier degré de priorité de valeur égale à 1.0.

Ensuite, dans une étape 920 et pour chaque premier degré de priorité P1 déterminé, le premier degré de priorité P1 est envoyé par le dispositif appelé 30 ou l'équipement réseau intermédiaire 40, dans un message à destination du dispositif appelant 10.

Le message envoyé est par exemple reçu par le dispositif appelant 10 à l'étape 110 de réception.

Le message peut ainsi être un message de signalisation indiquant la présence d'un flux média, par exemple de type « SIP 183 In Progress » ou « SIP 180 Ringing », ou un paquet de contrôle, par exemple un paquet RTCP de type APP.

Plus précisément, lorsque le message est de type « SIP 183 In Progress » ou « SIP 180 Ringing », le premier degré de priorité P1 est inséré dans un entête P-Early-Media (PEM) du message.

Dans le cas où un flux média est envoyé au dispositif appelant 10, un identifiant SSRC, éventuellement présent dans un entête de paquet RTP identifiant le flux media, peut aussi être inséré dans l'entête PEM du message de signalisation, pour que le dispositif appelant 10 puisse associer le message au flux média.

L'équipement réseau intermédiaire 40 envoyant le flux média (par exemple un serveur média de type MRF) peut être piloté par un serveur de signalisation (par exemple un serveur d'application téléphonique TAS). Le serveur de signalisation réserve une ressource sur cet équipement réseau intermédiaire 40. L'équipement réseau intermédiaire 40 retourne au serveur de signalisation l'adresse IP et le port réservé suite à la demande de réservation de ressource, afin qu'ils soient insérés dans le message de signalisation, ainsi que le SSRC associé au flux média afin qu'il soit également inséré dans un message de signalisation.

La valeur du premier degré de priorité P1 peut ensuite être modifiée par un autre équipement réseau recevant le message, typiquement un équipement d'interconnexions de réseaux.

Le dispositif appelé 30 ou l'équipement réseau intermédiaire 40 peut en outre envoyer le flux média associé au premier degré de priorité.

L'invention concerne en outre un procédé de gestion d'une pluralité de flux média destinés à être restitués par un dispositif appelant 10 avant la finalisation de l'établissement d'une communication, comprenant l'étape 100, 110, 130, 132, 134, 136 et/ou 140 du procédé de gestion décrit en référence à la figure 1, ainsi que l'étape 900, 910 et/ou 920 du procédé de gestion décrit en référence à la figure 9.

Les étapes de ce procédé sont par exemple mis en oeuvre par un système comprenant un dispositif appelant 10, un dispositif appelé 30 et/ou un équipement réseau intermédiaire 40, tels que le dispositif appelant 10, un dispositif appelé 30 et/ou un équipement réseau intermédiaire 40 décrits en référence à la figure 2.

## Revendications

1. Procédé de gestion d'une pluralité de flux média destinés à être restitués par un dispositif appelant (10) avant une finalisation d'un établissement d'une communication,
ledit procédé étant mis en oeuvre par ledit dispositif appelant (10) et avant la finalisation de l'établissement de ladite communication,
ledit procédé comprenant les étapes suivantes :
• envoi (100) d'une requête d'établissement de la communication à destination d'au moins un dispositif appelé (30),
• pour chaque flux média de ladite pluralité de flux média :
• réception (110) d'un message associé audit flux en réponse à la requête d'établissement de la communication,
• recherche (120) d'un premier degré de priorité (P1) associé audit flux média dans ledit message, et
• obtention (132) d'un deuxième degré de priorité associé audit flux média en fonction du résultat de la recherche,
• sélection (130) d'un flux média en vue de restituer ledit flux média, ledit flux média étant sélectionné parmi ladite pluralité de flux média, en fonction des deuxièmes degrés de priorité (P2) associés auxdits flux média de ladite pluralité de flux média, et,
• restitution (140) du flux média sélectionné,
l'étape de réception (110) d'un message comprenant en outre une réception (110) d'un troisième message en réponse à la requête d'établissement de la communication, et un enregistrement, dans une mémoire du dispositif appelant, pendant une durée prédéterminée (D) commençant à la réception du troisième message, de chaque flux de ladite pluralité de flux média, ladite pluralité de flux média étant reçue par le dispositif appelant (10),
et l'étape de sélection (130) étant mise en oeuvre lorsque la durée prédéterminée (D) est écoulée.

2. Procédé selon la revendication 1, dans lequel, pour chaque flux média de la pluralité de flux média :
• la valeur du deuxième degré de priorité (P2) obtenu (133) est égale à la valeur du premier degré de priorité (P1) en cas de présence du premier degré de priorité (P1) dans le message reçu,
• la valeur du deuxième degré de priorité (P2) obtenu (134) est égale à la valeur d'un degré de priorité par défaut (DP) en cas d'absence de premier degré de priorité (P1) dans le message reçu.

3. Procédé selon la revendication 1 ou 2, dans lequel l'étape de sélection (130) comprend une comparaison (136) des valeurs des deuxièmes degrés de priorité (P2) associés auxdits flux média de ladite pluralité de flux média, un flux média étant sélectionné en fonction du résultat de la comparaison.

4. Procédé selon la revendication 3, dans lequel l'étape de sélection (130) comprend une obtention (132) d'un deuxième degré de priorité (P2) associé à un premier flux média de ladite pluralité de flux média, suite à la réception (110) d'un premier message en réponse à la requête d'établissement de la communication,
ladite obtention (132) dudit deuxième degré de priorité (P2) associé audit premier flux média étant suivie d'une restitution (140) dudit premier flux média,
l'étape de sélection (130) comprenant en outre, pendant la restitution (140) dudit premier flux média, une obtention (132) d'un deuxième degré de priorité (P2) associé à un deuxième flux média de ladite pluralité de flux média, suite à la réception (110) d'un deuxième message en réponse à la requête d'établissement de la communication,
le procédé comprenant, si la valeur du deuxième degré de priorité du deuxième flux média est supérieure à la valeur du deuxième degré de priorité du premier flux média, une étape d'interruption de la restitution du premier flux média, et une étape de restitution (140) du deuxième flux média, à la place du premier flux média.

5. Procédé selon l'une quelconque des revendications 1 à 4, dans lequel l'étape de réception (110) comprend une réception d'un message de signalisation associé à un flux média de ladite pluralité de flux média, le premier degré de priorité (P1) étant alors recherché dans ledit message de signalisation.

6. Procédé selon l'une quelconque des revendications 1 à 5, dans lequel l'étape de réception (110) comprend une réception d'un paquet de contrôle associé à un flux média de ladite pluralité de flux média, le premier degré de priorité (P1) étant alors recherché dans ledit paquet de contrôle.

7. Procédé selon l'une quelconque des revendications 1 à 6, dans lequel la durée prédéterminée (D) dépend de la valeur du deuxième degré de priorité obtenu en fonction du résultat de la recherche dans ledit troisième message.

8. Procédé selon l'une quelconque des revendications 1 à 7, dans lequel la restitution (140) est accélérée de sorte que la durée de l'étape de restitution est diminuée de la durée prédéterminée (D).

9. Procédé selon l'une quelconque des revendications 1 à 8, dans lequel pour chaque flux média de ladite pluralité le premier degré de priorité (P1) est déterminé en fonction d'une distance réseau entre le dispositif appelant (10) et un dispositif réseau (30, 40) associé audit flux.

10. Dispositif appelant (10) configuré pour mettre en oeuvre un procédé de gestion selon l'une quelconque des revendications 1 à 9.

11. Système de gestion d'au moins un flux média comprenant le dispositif appelant (10) selon la revendication 10, et comprenant un dispositif appelé (30) ou un équipement réseau intermédiaire (40) configuré pour mettre en oeuvre les étapes suivantes :
• pour chaque flux de la pluralité, détermination d'un premier degré de priorité (P1) associé ; et,
• pour chaque premier degré de priorité (P1) déterminé, envoi dudit premier degré de priorité (P1) dans le message reçu par le dispositif appelant (10) en réponse à l'envoi de la requête d'établissement de la communication.

12. Programme d'ordinateur comportant des instructions qui, lorsque le programme est exécuté par un ordinateur, conduisent celui-ci à mettre en oeuvre les étapes du procédé selon l'une quelconque des revendications 1 à 9.

13. Support d'enregistrement lisible par un ordinateur sur lequel est enregistré le programme d'ordinateur selon la revendication 12.

## Patentansprüche

1. Verfahren zur Verwaltung einer Vielzahl von Medienströmen, die dazu bestimmt sind, durch eine rufende Vorrichtung (10) wiedergegeben zu werden, vor einem Abschluss einer Herstellung einer Kommunikation, wobei das Verfahren durch die rufende Vorrichtung (10) und vor dem Abschluss der Herstellung der Kommunikation umgesetzt wird,
wobei das Verfahren die folgenden Schritte beinhaltet:
• Senden (100) einer Anforderung nach Herstellung der Kommunikation an mindestens eine gerufene Vorrichtung (30),
• für jeden Medienstrom der Vielzahl von Medienströmen:
• Empfangen (110) einer Nachricht, die mit dem Strom assoziiert ist, als Reaktion auf die Anforderung nach Herstellung der Kommunikation,
• Suchen (120) nach einem ersten Prioritätsgrad (P1), der mit dem Medienstrom assoziiert ist, in der Nachricht und
• Erhalten (132) eines zweiten Prioritätsgrads, der mit dem Medienstrom assoziiert ist, in Abhängigkeit von dem Ergebnis der Suche,
• Auswählen (130) eines Medienstroms, um den Medienstrom wiederzugeben, wobei der Medienstrom in Abhängigkeit von den zweiten Prioritätsgraden (P2), die mit den Medienströmen der Vielzahl von Medienströmen assoziiert sind, aus der Vielzahl von Medienströmen ausgewählt wird, und
• Wiedergeben (140) des ausgewählten Medienstroms, wobei der Schritt des Empfangens (110) einer Nachricht ferner das Empfangen (110) einer dritten Nachricht als Reaktion auf die Anforderung nach Herstellung der Kommunikation und das Speichern, in einem Speicher der rufenden Vorrichtung und für eine vorbestimmte Dauer (D), die mit dem Empfang der dritten Nachricht beginnt, jedes Stroms der Vielzahl von Medienströmen beinhaltet, wobei die Vielzahl von Medienströmen durch die rufende Vorrichtung (10) empfangen wird,
und wobei der Schritt des Auswählens (130) umgesetzt wird, wenn die vorbestimmte Dauer (D) abgelaufen ist.

2. Verfahren nach Anspruch 1, wobei, für jeden Medienstrom der Vielzahl von Medienströmen:
• der Wert des erhaltenen (133) zweiten Prioritätsgrads (P2) gleich dem Wert des ersten Prioritätsgrads (P1) ist, wenn der erste Prioritätsgrad (P1) in der empfangenen Nachricht vorhanden ist,
• der Wert des erhaltenen (134) zweiten Prioritätsgrads (P2) gleich dem Wert eines standardmäßigen Prioritätsgrads (DP) ist, wenn kein erster Prioritätsgrad (P1) in der empfangenen Nachricht vorhanden ist.

3. Verfahren nach Anspruch 1 oder 2, wobei der Schritt des Auswählens (130) das Vergleichen (136) der Werte der zweiten Prioritätsgrade (P2), die mit den Medienströmen der Vielzahl von Medienströmen assoziiert sind, beinhaltet, wobei ein Medienstrom in Abhängigkeit von dem Ergebnis des Vergleichs ausgewählt wird.

4. Verfahren nach Anspruch 3, wobei der Schritt des Auswählens (130) das Erhalten (132) eines zweiten Prioritätsgrads (P2), der mit einem ersten Medienstrom der Vielzahl von Medienströmen assoziiert ist, im Anschluss an das Empfangen (110) einer ersten Nachricht als Reaktion auf die Anforderung nach Herstellung der Kommunikation beinhaltet,
wobei auf das Erhalten (132) des zweiten Prioritätsgrads (P2), der mit dem ersten Medienstrom assoziiert ist, eine Wiedergabe (140) des ersten Medienstroms folgt,
wobei der Schritt des Auswählens (130) ferner während der Wiedergabe (140) des ersten Medienstroms das Erhalten (132) eines zweiten Prioritätsgrads (P2), der mit einem zweiten Medienstrom der Vielzahl von Medienströmen assoziiert ist, im Anschluss an das Empfangen (110) einer zweiten Nachricht als Reaktion auf die Anforderung nach Herstellung der Kommunikation beinhaltet,
wobei das Verfahren, wenn der Wert des zweiten Prioritätsgrads des zweiten Medienstroms größer ist als der Wert des zweiten Prioritätsgrads des ersten Medienstroms, einen Schritt des Unterbrechens der Wiedergabe des ersten Medienstroms und einen Schritt der Wiedergabe (140) des zweiten Medienstroms anstelle des ersten Medienstroms beinhaltet.

5. Verfahren nach einem beliebigen der Ansprüche 1 bis 4, wobei der Schritt des Empfangens (110) das Empfangen einer Signalisierungsnachricht, die mit einem Medienstrom der Vielzahl von Medienströmen assoziiert ist, beinhaltet, wobei der erste Prioritätsgrad (P1) in diesem Fall in der Signalisierungsnachricht gesucht wird.

6. Verfahren nach einem beliebigen der Ansprüche 1 bis 5, wobei der Schritt des Empfangens (110) das Empfangen eines Steuerungspakets, das mit einem Medienstrom der Vielzahl von Medienströmen assoziiert ist, beinhaltet, wobei der erste Prioritätsgrad (P1) in diesem Fall in dem Steuerungspaket gesucht wird.

7. Verfahren nach einem beliebigen der Ansprüche 1 bis 6, wobei die vorbestimmte Dauer (D) von dem Wert des zweiten Prioritätsgrads abhängt, der in Abhängigkeit von dem Ergebnis der Suche in der dritten Nachricht erhalten wird.

8. Verfahren nach einem beliebigen der Ansprüche 1 bis 7, wobei die Wiedergabe (140) beschleunigt wird, sodass die Dauer des Wiedergabeschritts um die vorbestimmte Dauer (D) reduziert wird.

9. Verfahren nach einem beliebigen der Ansprüche 1 bis 8, wobei, für jeden Medienstrom der Vielzahl, der erste Prioritätsgrad (P1) in Abhängigkeit von einem Netzabstand zwischen der rufenden Vorrichtung (10) und einer mit dem Strom assoziierten Netzvorrichtung (30, 40) bestimmt wird.

10. Rufende Vorrichtung (10), die dazu konfiguriert ist, ein Verwaltungsverfahren nach einem beliebigen der Ansprüche 1 bis 9 umzusetzen.

11. System zur Verwaltung mindestens eines Medienstroms, beinhaltend die rufende Vorrichtung (10) nach Anspruch 10 und beinhaltend eine gerufene Vorrichtung (30) oder eine zwischengeschaltete Netzausrüstung (40), die dazu konfiguriert ist, die folgenden Schritte umzusetzen:
• für jeden Strom der Vielzahl, Bestimmen eines assoziierten ersten Prioritätsgrads (P1); und
• für jeden bestimmten ersten Prioritätsgrad (P1), Senden des ersten Prioritätsgrads (P1) in der Nachricht, die durch die rufende Vorrichtung (10) als Reaktion auf das Senden der Anforderung nach Herstellung der Kommunikation empfangen wird.

12. Computerprogramm, das Anweisungen beinhaltet, die, wenn das Programm von einem Computer ausgeführt wird, diesen dazu veranlassen, die Schritte des Verfahrens nach einem beliebigen der Ansprüche 1 bis 9 umzusetzen.

13. Computerlesbares Speichermedium, auf dem das Computerprogramm nach Anspruch 12 gespeichert ist.

## Claims

1. Method for managing a plurality of media streams intended to be rendered by a calling device (10) before finalization of set-up of a communication,
said method being implemented by said calling device (10) before finalization of set-up of said communication,
said method comprising the following steps:
sending (100) a communication set-up request to at least one called device (30),
for each media stream of said plurality of media streams:
receiving (110) a message associated with said stream in response to the communication set-up request,
searching (120) for a first degree of priority (P1) associated with said media stream in said message, and obtaining (132) a second degree of priority associated with said media stream depending on the result of the search,
selecting (130) a media stream with a view to rendering said media stream, said media stream being selected from said plurality of media streams, depending on the second degrees of priority (P2) associated with said media streams of said plurality of media streams, and,
rendering (140) the selected media stream,
the step of receiving (110) a message further comprising receiving (110) a third message in response to the communication set-up request, and recording, in a memory of the calling device, for a predetermined length of time (D) beginning on receipt of the third message, each stream of said plurality of media streams, said plurality of media streams being received by the calling device (10),
and the selecting step (130) being implemented when the predetermined length of time (D) has elapsed.

2. Method according to Claim 1, wherein, for each media stream of the plurality of media streams:
the value of the second degree of priority (P2) obtained (133) is equal to the value of the first degree of priority (P1) if the first degree of priority (P1) is present in the received message,
the value of the second degree of priority (P2) obtained (134) is equal to the value of a default degree of priority (DP) if the first degree of priority (P1) is absent from the received message.

3. Method according to Claim 1 or 2, wherein the selecting step (130) comprises comparing (136) the values of the second degrees of priority (P2) associated with said media streams of said plurality of media streams, a media stream being selected depending on the result of the comparison.

4. Method according to Claim 3, wherein the selecting step (130) comprises obtaining (132) a second degree of priority (P2) associated with a first media stream of said plurality of media streams, following receipt (110) of a first message in response to the communication set-up request,
obtaining (132) said second degree of priority (P2) associated with said first media stream being followed by rendering (140) of said first media stream,
the selecting step (130) further comprising, during rendering (140) of said first media stream, obtaining (132) a second degree of priority (P2) associated with a second media stream of said plurality of media streams, following receipt (110) of a second message in response to the communication set-up request,
the method comprising, if the value of the second degree of priority of the second media stream is greater than the value of the second degree of priority of the first media stream, a step of interrupting rendering of the first media stream, and a step of rendering (140) the second media stream, instead of the first media stream.

5. Method according to any one of Claims 1 to 4, wherein the receiving step (110) comprises receiving a signalling message associated with a media stream of said plurality of media streams, the first degree of priority (P1) then being sought in said signalling message.

6. Method according to any one of Claims 1 to 5, wherein the receiving step (110) comprises receiving a control packet associated with a media stream of said plurality of media streams, the first degree of priority (P1) then being sought in said control packet.

7. Method according to any one of Claims 1 to 6, wherein the predetermined length of time (D) depends on the value of the second degree of priority obtained depending on the result of the search in said third message.

8. Method according to any one of Claims 1 to 7, wherein rendering (140) is accelerated so that the duration of the rendering step is decreased by the predetermined length of time (D).

9. Method according to any one of Claims 1 to 8, wherein, for each media stream of said plurality, the first degree of priority (P1) is determined depending on a network distance between the calling device (10) and a network device (30, 40) associated with said stream.

10. Calling device (10) configured to implement a managing method according to any one of Claims 1 to 9.

11. System for managing at least one media stream comprising the calling device (10) according to Claim 10, and comprising a called device (30) or an intermediate network equipment (40) configured to implement the following steps:
for each stream of the plurality, determining an associated first degree of priority (P1); and,
for each determined first degree of priority (P1), sending said first degree of priority (P1) in the message received by the calling device (10) in response to the communication set-up request being sent.

12. Computer program comprising instructions that, when the program is executed by a computer, cause the latter to implement the steps of the method according to any one of Claims 1 to 9.

13. Computer-readable recording medium on which the computer program according to Claim 12 is recorded.
